# FASCICULE DE BREVET EUROPEEN

(11) **EP 3 835 892 B1**
(45) Date de publication et mention de la délivrance du brevet: **10.08.2022**
(21) Numéro de dépôt: 19214819.5
(22) Date de dépôt: 10.12.2019
(51) Int. Cl.: G04G 21/02, G04G 21/08

(54) **MONTRE POURVUE D'UN ORGANE DE COMMANDE**
ARMBANDUHR MIT STEUERUNGSORGAN
WATCH PROVIDED WITH A CONTROLLER

(43) Date de publication de la demande: 16.06.2021
(73) Titulaire: The Swatch Group Research and Development Ltd, 2074 Marin (CH)
(72) Inventeur: FERRI, Yvan, 1004 Lausanne (CH); TORTORA, Pierpasquale, 2000 Neuchâtel (CH)
(74) Mandataire: ICB SA

(56) Documents cités:
- WO-A1-2014/200766
- WO-A1-2019/050778
- US-A1- 2017 090 599

## Description

### Domaine technique

L'invention est relative à une montre pourvue d'au moins une fonction gérable de manière électronique et pourvue d'un organe de commande pour contrôler cette fonction.

### Arrière-plan technologique

Les montres mécaniques ou électromécaniques comprennent de manière standard une tige-couronne qui permet de régler la position des aiguilles en tournant la couronne, ainsi que de remonter le barillet dans le cas d'une montre mécanique. Dans la plupart des cas, la couronne se trouve dans une position de repos proche de la boîte de la montre, et il faut la tirer vers une position de réglage pour ajuster le temps et, le cas échéant, la date.

De plus en plus des fonctions additionnelles sont prévues, tel qu'un affichage électronique d'informations personnelles et/ou géographiques, par exemple un agenda, des données fitness et de géolocalisation. Ceci est le cas également pour les montres équipées d'un mouvement mécanique, par exemple par l'ajout d'un module électronique comprenant un écran digital agencé sur une partie du cadran.

La présence des fonctions additionnelles susmentionnées requiert généralement des moyens de commande spécifiques, qui permettent par exemple de sélectionner une fonction, de naviguer dans un menu, etc.

Des montres électroniques ont été développées avec un organe de commande de type 'joystick' ou 'trackball'. Des exemples de ces solutions sont respectivement illustrés par les documents EP 1168113 et EP 0582150. Mais on notera que ces solutions ne sont pas prévues pour une montre à remontage mécanique. Le document EP 0582150 décrit également une montre pourvue d'une tige-couronne ainsi que d'un dispositif 'trackball'. Le désavantage de cette dernière solution est que la présence de deux organes de commande séparés spatialement n'est pas toujours souhaitable d'un point de vue esthétique et/ou d'un point de vue économique étant donné que la boîte de montre est plus complexe à usiner. On remarquera aussi qu'une bonne étanchéité de la boîte de montre est plus difficile à obtenir avec les organes de commande de type 'joystick' ou 'trackball' décrits dans les documents antérieurs susmentionnés. De plus, les modes de réalisation actuels de ce type d'organe de commande comprennent des éléments mobiles, ce qui rend la construction mécanique plus complexe. WO2014/200766 A1 divulgue une montre ayant des capteurs optiques pour détecter le mouvement du doigt autour du périmètre extérieur de la couronne d'une montre intelligente.

### Résumé de l'invention

L'invention vise à produire une montre qui ne souffre pas des inconvénients décrits ci-dessus. Ce but est atteint par la montre selon les revendications annexées.

Une montre selon l'invention comprend une boîte de montre qui inclut une carrure, un mouvement horloger à l'intérieur de la carrure, et un organe de commande définissant un axe central et monté latéralement par rapport à la carrure, la montre étant pourvue d'au moins une fonction électronique. L'organe de commande comporte un guide optique comprenant une face proximale proche de la carrure et une face distale éloignée de la carrure, ledit guide optique permettant la transmission de signaux optiques entre sa face distale et sa face proximale, la face distale étant agencée de manière qu'un utilisateur puisse la toucher du doigt. La montre est pourvue d'au moins une source de lumière apte à illuminer au moins une partie de la face distale à travers le guide optique. La montre est pourvue d'un dispositif de prise d'images comprenant un photo-détecteur, notamment un capteur matriciel de lumière, et agencé pour pouvoir produire, lorsque la source de lumière est active, une image d'une partie d'un doigt d'un utilisateur qui est située au niveau de la face distale du guide optique dans une zone de détection spatialement déterminée et fixe relativement à la carrure. La montre comporte en outre un processeur configuré pour pouvoir recevoir du photo-détecteur une pluralité d'images numériques successives de parties dudit doigt qui sont situées successivement dans ladite zone de détection, pour pouvoir traiter cette pluralité d'images numériques de sorte à détecter un déplacement dudit doigt relativement à ladite zone de détection, et pour pouvoir engendrer une commande qui gère ladite fonction électronique de la montre sur la base dudit déplacement du doigt.

Selon une forme d'exécution particulière, la source de lumière et le dispositif de prise d'images sont incorporés dans la paroi latérale de la carrure de la montre. Selon une autre forme d'exécution, la source de lumière et le photo-détecteur sont agencés sur un même PCB qui est introduit dans la paroi latérale de la carrure ou agencé contre une surface interne de cette paroi latérale.

Selon des formes d'exécution préférées, l'organe de commande remplit au moins une première fonction gérée par une rotation ou un mouvement axial de cet organe de commande, et la fonctionnalité électronique gérée par l'intermédiaire de la source lumineuse et du dispositif de prise d'images s'ajoutent à cette première fonction.

L'organe de commande d'une montre selon l'invention ne comprend pas d'éléments mobiles pour implémenter la fonction électronique ; ce qui simplifie la construction mécanique de l'organe de commande.

### Brève description des figures

L'invention sera décrite ci-après de manière plus détaillée à l'aide des dessins annexés, donnés à titre d'exemples nullement limitatifs, dans lesquels :
- La figure 1 représente une section verticale du mécanisme tige-couronne dans une montre selon une forme d'exécution de l'invention.
- La figure 2 représente une section horizontale du même mécanisme que la figure 1.
- La figure 3 représente une vue éclatée des composants du mécanisme des figures 1 et 2.
- Les figures 4 et 5 représentent des coupes 3D qui montrent les positions de la source de lumière et du photo-détecteur dans la montre des figures 1 à 3.
- La figure 6 clarifie la fonction des lentilles en combinaison avec la source de lumière et le photo-détecteur.

### Description détaillée d'une forme d'exécution de l'invention

L'invention s'applique aussi bien à des montres munies d'un mouvement mécanique que d'un mouvement électromécanique. Il peut même s'appliquer à une montre électronique sans aiguilles.

Dans le cas d'un mouvement mécanique, la montre est pourvue de fonctions additionnelles avec un caractère électronique. Cette montre peut comporter un écran digital qui s'étend sur une portion du cadran, prévu pour l'affichage du temps par des aiguilles, et sur lequel s'affichent diverses données, telles que la date, le temps, des messages alphanumériques ou d'autres informations qui sont accessibles par exemple en navigant dans un ou plusieurs menus. La montre comprend un mécanisme tige-couronne de remontage et de réglage des aiguilles, bien connu dans l'état de la technique.

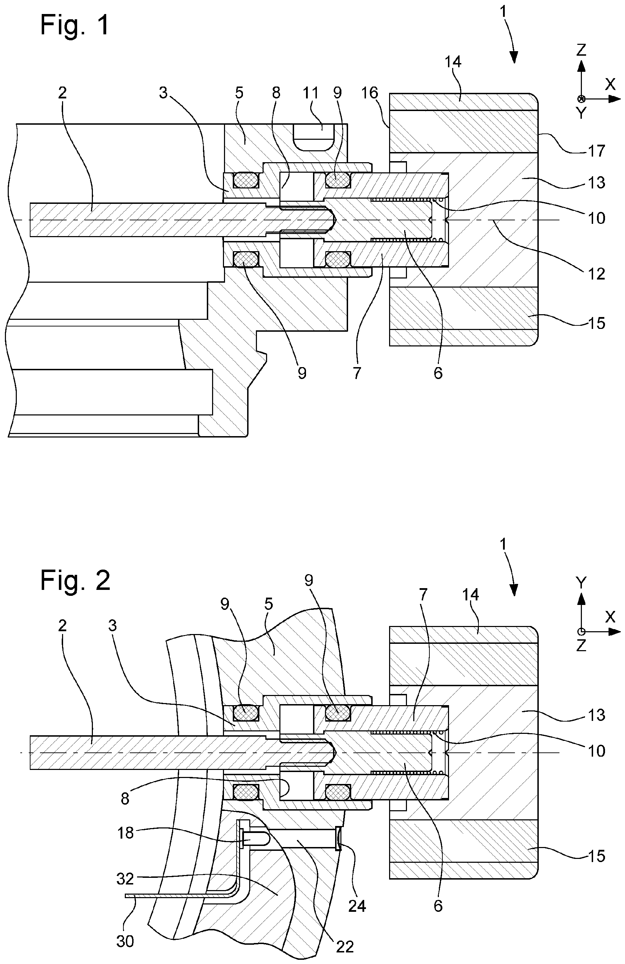

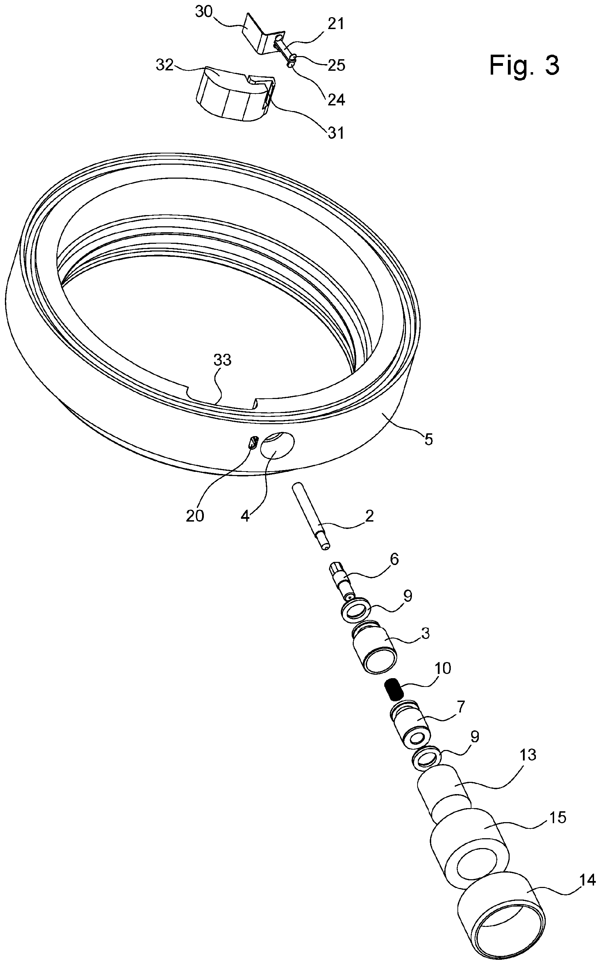

Les figures 1 et 2 représentent des coupes verticales et horizontales du mécanisme tige-couronne d'une montre selon une forme d'exécution de l'invention. A la figure 3, les différents composants sont visualisés dans une vue éclatée. De manière connue, la couronne 1 est reliée à une tige de remontoir 2 par l'intermédiaire d'un raccord-tige 6 chassé sur une extrémité de la tige 2. L'ensemble de la tige 2 et du raccord-tige 6 passe à travers un tube 3 montée de manière fixe dans un trou 4 usiné dans la paroi de la carrure 5 de la montre. Dans la boîte de montre terminée, la carrure 5 forme le support dans lequel est installé un mouvement horloger qui est réglable par le mécanisme tige-couronne. La carrure 5 est pourvue d'une rainure circulaire 11 sur sa surface supérieure, pour recevoir le verre de la montre. La couronne 1 peut tourner autour de son axe central 12 qui est coaxial avec l'axe central de la tige 2.

La couronne rotative 1 n'est qu'une forme d'exécution d'un organe de commande monté latéralement par rapport à la carrure et auquel l'invention est applicable. Un autre exemple d'un tel organe de commande est la tête (généralement non-rotative) d'un poussoir d'une montre chronographe. L'invention sera décrite pour le cas de la couronne rotative, qui représente le cas le plus courant dans le domaine horloger mais qui ne limite pas la portée de l'invention.

Dans la forme d'exécution représentée aux figures, la couronne rotative 1 est reliée au raccord-tige 6 par un mécanisme de poussoir à ressort qui permet un rapprochement axial auto-réversible de la couronne par rapport à la carrure 5. Ce type de mécanisme est connu en soi et ne forme pas une limitation de la portée de l'invention. La couronne est fixée sur un élément tubulaire 7 qui peut se déplacer axialement par rapport au raccord-tige 6, celui-ci étant logé à l'intérieur de l'élément tubulaire. Le raccord-tige et l'élément 7 sont pourvus de profils correspondants permettant l'entrainement de la tige 2 en rotation par la couronne 1. Comme montré à la figure 2, la poussée de la couronne, exercée manuellement par l'utilisateur de la montre, actionne le mouvement axial de l'élément 7 jusqu'à ce que ce dernier arrive en contact avec une paroi verticale 8 du tube 3. Des joints toriques 9 en matériau compressible entre le tube 3 et la carrure 5 et entre l'élément 7 et le tube 3 assurent l'étanchéité du mécanisme. Un ressort 10 est monté entre une butée pourvue sur le raccord tige 6 et une surface intérieure de la couronne 1, de sorte que la poussée de la couronne comprime le ressort, qui repousse la couronne vers sa position initiale dès que la pression exercée sur la couronne est relâchée. La position étendue représentée aux figures est donc la position de repos de la couronne 1.

De manière connue en soi, cette position permet par exemple à l'utilisateur de remonter sa montre manuellement en tournant la couronne 1. Selon des formes d'exécution, et de manière également connue, la couronne peut être éloignée de la carrure 5, en tirant manuellement la couronne et entraînant la tige 2 en direction axiale, pour activer des modes de réglage mécanique tel que l'ajustement de la position des aiguilles. Différents systèmes existent qui règlent le positionnement axial de la couronne 1 et l'actionnement du réglage mécanique, et l'invention est applicable en combinaison avec l'une quelconque de ces systèmes. Indépendamment du système appliqué, l'invention est relative à des fonctionnalités apportées à la couronne 1, au moins quand celle-ci se trouve dans la position de repos.

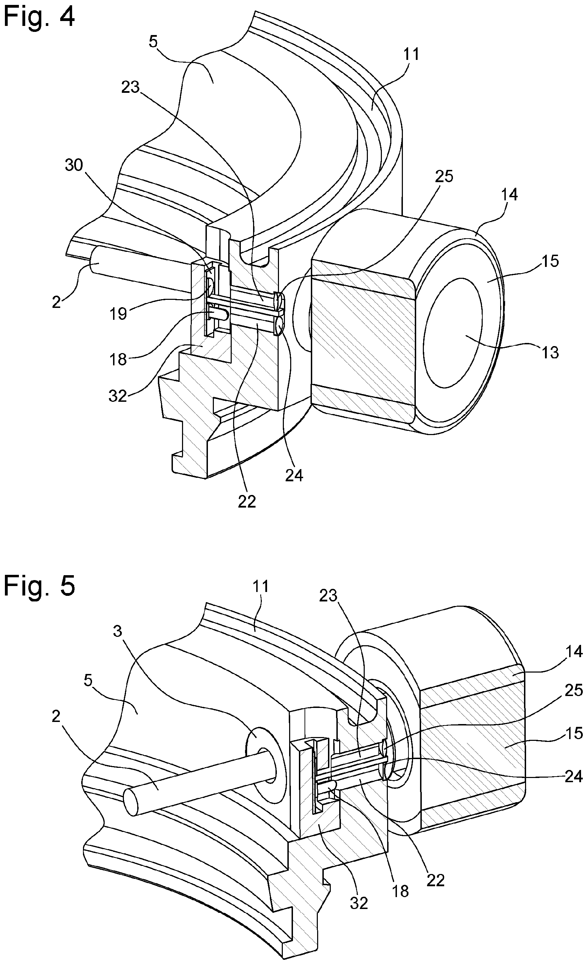

Selon la forme d'exécution représentée, la couronne 1 comprend un guide optique torique 15 incorporé dans la couronne et agencé de manière coaxiale par rapport à l'axe central 12. Selon la forme d'exécution représentée, le guide optique 15 est fixé entre un cylindre 13 et un anneau 14, en matériau opaque, l'assemblage de ces trois pièces formant la couronne 1. Le guide optique 15 comprend une face proximale 16 qui est proche de la carrure 5 et une face distale 17 éloignée de la carrure 5. Le guide optique est fabriqué d'un matériau transparent, éventuellement teinté. La montre est pourvue d'une source de lumière 18, par exemple du type LED (Light Emitting Diode), et d'un photo-détecteur tous deux montés en face du guide optique 15. Dans la forme d'exécution représentée, la LED 18 et le photo-détecteur 19 sont incorporés dans la carrure 5, la LED 18 étant monté en dessous du photo-détecteur 19. La carrure 5 comprend une ouverture 20 dans sa paroi latérale, une portion supérieure de l'ouverture étant agencée en face du photo-détecteur, et une portion inférieure de l'ouverture étant agencée en face de la LED 18, avec un séparateur opaque 21 entre les deux portions, qui sépare également la LED 18 du photo-détecteur, créant ainsi deux canaux optiques séparées 22 et 23 (voir figures 4 et 5), en face respectivement de la LED et du photo-détecteur. De l'autre côté des canaux par rapport à la LED et au photo-détecteur, deux lentilles 24 et 25 sont agencées.

Le photo-détecteur 19 est de préférence un capteur matriciel de lumière qui comprend une matrice de pixels générant des courants électriques qui sont représentatifs de l'image capturée. Ce type de photo-détecteur est connu en soi.

Le capteur photographique 19 ainsi que la LED 18 sont montés sur une carte de circuit imprimé (PCB) 30, comportant également les composants nécessaires (non-représentés) pour contrôler la LED et le photo-détecteur et pour traiter les signaux obtenus. Selon la forme d'exécution représentée, le PCB 30 est réalisé en forme d'équerre et le séparateur 21 avec les lentilles 24 et 25 est fixé au PCB 30, faisant saillie à partir de la surface du PCB. Cet assemblage est inséré dans une gorge 31 usinée dans une pièce auxiliaire 32, qui est elle-même fixée dans une cavité 33, usinée à l'intérieur de la paroi de la carrure 5, et qui recouvre l'ouverture 20. Cette réalisation ne représente qu'une forme d'exécution de l'incorporation de la source de lumière 18 et du photo-détecteur 19 dans la carrure, et d'autres modes de réalisation sont possibles.

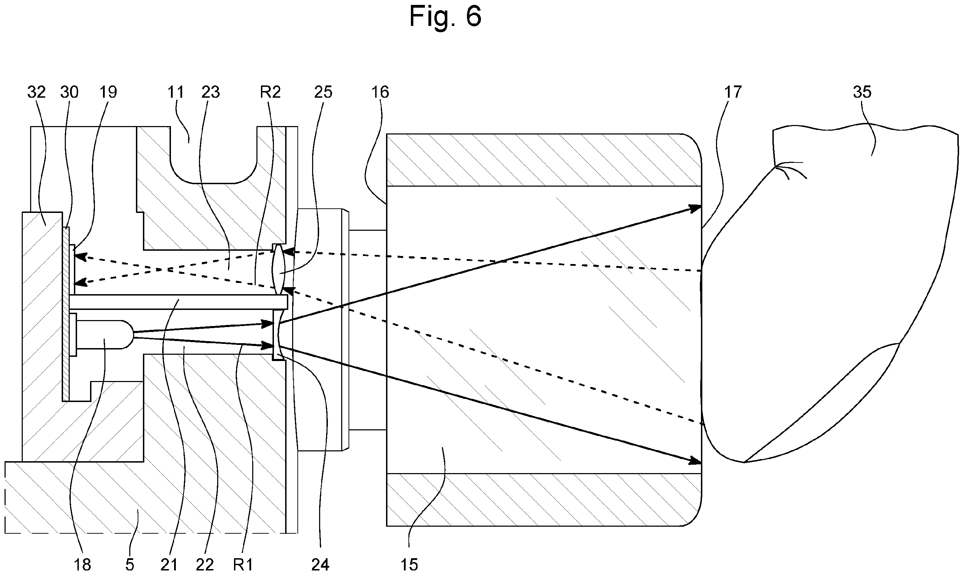

Les positions et les fonctionnalités des lentilles 24 et 25 sont clarifiés par la figure 6. La lentille inférieure 24 est une lentille concave positionnée de manière que la LED 18 se trouve dans l'arrière-plan focale de la lentille 24, avec le but d'élargir au maximum les rayons R1 générés par la LED et passant par le premier canal 22, et d'illuminer ainsi une zone de détection sur la face distale 17 du guide optique 15, à travers de ce guide optique. La zone de détection est spatialement déterminée par la partie du face distale 17 illuminée par les projections, générées par la lentille 24, des rayons R1 produits par la LED. La zone de détection est fixe par rapport à la carrure 5 puisque la couronne 1 est essentiellement immobile en direction radiale par rapport à l'axe central 12. Grâce à la forme torique du guide optique 15, la forme et les dimensions de la zone de détection sont maintenues fixes par rapport à la carrure 5, indépendamment de la position angulaire de la couronne 1.

L'ensemble de la lentille convexe 25 et du photo-détecteur 19 forme un dispositif de prise d'images, dont le photo-détecteur 19 est agencé pour pouvoir produire, lorsque la source de lumière 18 est active, une image d'une partie du doigt 35 située dans la zone de détection. L'image est projetée sur le capteur 19 par les rayons R2 passant par le deuxième canal 23, lorsque l'utilisateur touche avec son doigt la face distale 17 du guide optique 15.

De plus, le photo-détecteur 19 est agencé de manière à pouvoir générer une pluralité d'images numériques de parties dudit doigt situées successivement dans ladite zone de détection. Autrement dit, le photo-détecteur 19 génère une succession d'images numériques de l'empreinte digitale de l'utilisateur, lorsque celui-ci touche la face distale 17 du guide optique 15 illuminée par la source 18. Quand l'utilisateur déplace son doigt en restant en contact avec la face distale 17, l'analyse des différences entre les images successives permet de déterminer les déplacements de l'empreinte en termes de l'ampleur et de la vitesse de ces déplacements. Quand l'échantillonnage des signaux est suffisamment rapide, les images capturées permettent de suivre les mouvements du doigt en temps réel et de traduire ces signaux en commandes pour gérer des fonctionnalités électroniques de la montre. Ce fonctionnement est similaire au fonctionnement d'une souris d'ordinateur, à la différence que la source de lumière est maintenant statique par rapport au motif de la surface qui est détecté (à savoir l'empreinte digitale), ce motif étant lui mobile. Comme les algorithmes utilisés pour le fonctionnement des souris d'ordinateurs détectent un mouvement relatif entre le photo-détecteur et le motif de la surface sur laquelle est déplacée la souris optique, ces algorithmes sont applicables à la détection du déplacement d'une empreinte digitale sur l'organe de commande dans une montre selon l'invention.

Un processeur (non-représenté) est à bord sur le PCB 30 pour traiter les signaux générés par le photo-détecteur et pour les traduire en commandes qui vont gérer une ou plusieurs fonctionnalités électroniques de la montre, par exemple le pilotage d'un curseur sur un écran digital en deux dimensions. Comme indiqué ci-dessus, on peut implémenter des méthodes et des algorithmes bien connus du domaine de l'informatique, pour le traitement des signaux ainsi que pour la génération de commandes.

Une batterie ou autre source d'énergie électrique, tel qu'une cellule photovoltaïque, est présente dans la montre pour alimenter les composants montés sur le PCB 30 et/ou d'autres composants électroniques implémentés dans la montre.

On voit aux figures que la LED 18 est positionné à la même hauteur que l'axe central 12. Ce positionnement permet l'illumination d'une zone de détection qui s'étend de manière symétrique par rapport au plan horizontal qui contient l'axe 12. D'autres manières de positionner la source de lumière 18 et le photo-détecteur 19 sont possibles.

De préférence, si l'organe de commande est réalisé par l'intermédiaire d'un poussoir à ressort, comme c'est le cas pour la forme d'exécution représentée, la montre comprend un détecteur de proximité (non-représenté) qui est configuré pour détecter la poussée de l'organe de commande 1, actionnée par l'utilisateur à l'encontre de la force du ressort 10, et de générer un signal électrique en fonction de cette détection, de sorte que le processeur génère en réponse une commande spécifique. Les commandes générées par la poussée de la couronne 1 peuvent être par exemple des commandes de confirmation d'une sélection parmi des options présentées dans un menu. La poussée réversible peut être utilisée également pour activer et ensuite désactiver la fonction 'souris optique'. Dans une variante, la durée de la poussée peut déterminer la commande ; par exemple, une durée plus longue pour l'activation ou désactivation de la fonction 'souris optique' et une durée plus courte pour confirmer une sélection dès que la fonction est active.

Différents types de détecteur de proximité peuvent être utilisés pour remplir les fonctionnalités décrites dans le paragraphe précédent, tel qu'un détecteur magnétique à réluctance variable. De manière alternative, on peut prévoir un détecteur capacitif réalisé par l'intégration de deux plaques d'un condensateur agencées respectivement dans le tube 3 et dans l'élément 7.

Il est à noter que l'invention ne se limite pas à des organes de commande qui ont une fonction désignée et liée à la rotation ou le mouvement axial de l'organe de commande. L'invention couvre également un organe de commande qui n'est pas rotatif ni déplaçable en direction axiale. Dans ce cas particulier, l'organe de commande est premièrement dédié à la fonction 'souris optique' selon l'invention.

La forme torique et coaxiale avec l'axe central 12 du guide optique 15 est particulièrement utile pour les organes de commandes rotatives, puisque les fonctions activables par l'intermédiaire du doigt de l'utilisateur sont disponibles indépendamment de la position rotative de l'organe de commande. Pour les organes de commandes non-rotatifs, des formes alternatives du guide optique sont possibles.

## Revendications

1. Une montre comprenant une boîte de montre qui inclut une carrure (5) et un organe de commande (1) définissant un axe central (12) et monté latéralement par rapport à la carrure, la montre étant pourvue d'au moins une fonction électronique ; **caractérisée en ce que**:
- la boîte de montre inclut un mouvement horloger à l'intérieur de la carrure,
- l'organe de commande (1) comporte un guide optique (15) comprenant une face proximale (16) proche de la carrure et une face distale (17) éloignée de la carrure, ledit guide optique permettant la transmission de signaux optiques entre sa face distale et sa face proximale, la face distale (17) étant agencée de manière qu'un utilisateur puisse la toucher du doigt (35),
- la montre est pourvue d'au moins une source de lumière (18) apte à illuminer au moins une partie de la face distale (17) à travers le guide optique (15),
- la montre est pourvue d'un dispositif de prise d'images comprenant un photo-détecteur (19) et agencé pour pouvoir produire, lorsque la source de lumière (18) est active, une image d'une partie d'un doigt (35) d'un utilisateur qui est située au niveau de la face distale (17) du guide optique (15) dans une zone de détection spatialement déterminée et fixe relativement à la carrure (5),
- la montre comporte un processeur configuré pour pouvoir recevoir du photo-détecteur (19) une pluralité d'images numériques successives de parties dudit doigt qui sont situées successivement dans ladite zone de détection, pour pouvoir traiter cette pluralité d'images numériques de sorte à détecter un déplacement dudit doigt relativement à ladite zone de détection, et pour pouvoir engendrer une commande qui gère ladite fonction électronique de la montre sur la base dudit déplacement du doigt.

2. Une montre selon la revendication 1, **caractérisée en ce que** le guide optique (15) est une pièce torique coaxiale avec l'axe central (12).

3. Une montre selon la revendication 2, **caractérisée en ce que** le guide optique (15) a la forme d'un tube qui est fixé entre un cylindre (13) et un anneau (14) fabriqués d'un matériau opaque et formant, avec le guide optique (15), l'organe de commande (1).

4. Une montre selon une quelconque des revendications précédentes, **caractérisée en ce que** la source de lumière (18) et le photo-détecteur (19) sont incorporés dans ou contre la surface interne de la paroi latérale de la carrure (5), laquelle est pourvue de deux canaux optiques (22,23) qui sont positionnés respectivement en face de la source de lumière et du photo-détecteur, les canaux étant séparés par un séparateur opaque (21) et étant pourvus respectivement de lentilles (24,25) agencées tel que :
- la première lentille (24) étend les rayons de lumière (R1) générés par la source, de manière à illuminer ladite zone de détection,
- la deuxième lentille (25), formant le dispositif de prise d'images, étant agencée pour projeter ladite image sur le photo-détecteur.

5. Une montre selon la revendication 4, **caractérisée en ce que** :
- la source (18) et le photo-détecteur (19) sont montés sur un même PCB (30),
- le séparateur (21) est fixé au PCB et s'élève à partir d'une surface du PCB,
- les lentilles (24,25) sont fixées au séparateur (21).

6. Une montre selon une quelconque des revendications précédentes, **caractérisée en ce que** l'organe de commande est une couronne rotative (1), apte à entraîner un élément allongé (6, 2) en rotation autour de l'axe central (12) quand un utilisateur tourne la couronne (1) pour effectuer une première fonction autre que ladite fonction électronique.

7. Une montre selon une quelconque des revendications 1 à 5, **caractérisée en ce que** l'organe de commande est une tête d'un poussoir ayant pour première fonction une activation d'une fonction d'un chronographe équipant la montre, cette première fonction étant autre que ladite fonction électronique.

8. Une montre selon une quelconque des revendications précédentes, **caractérisée en ce que** l'organe de commande (1) est capable de subir un rapprochement axial et auto-réversible par rapport à la carrure (5) ; **en ce que** la montre comprend au moins un détecteur agencé de manière à pouvoir détecter ledit rapprochement axial ; et **en ce que** ledit processeur est configuré pour engendrer en réponse audit rapprochement axial une commande spécifique.

9. Une montre selon la revendication 8, **caractérisée en ce que** la commande spécifique générée par la détection dudit rapprochement axial est l'activation ou la désactivation de la source de lumière et du photo-détecteur.

10. Une montre selon la revendication 8, **caractérisée en ce qu'**une commande générée par la détection dudit rapprochement axial est la confirmation d'une sélection.

11. Une montre selon une quelconque des revendications précédentes, **caractérisée en ce que** le mouvement horloger est du type mécanique.

## Patentansprüche

1. Uhr mit einem Uhrengehäuse, das ein Gehäusemittelteil (5) und ein Steuerorgan (1), das eine Mittelachse (12) definiert und seitlich an dem Gehäusemittelteil angebracht ist, aufweist, wobei die Uhr mit mindestens einer elektronischen Funktion versehen ist; **dadurch gekennzeichnet, dass**
- das Uhrengehäuse im Inneren des Gehäusemittelteils ein Uhrwerk enthält,
- das Steuerorgan (1) einen Lichtleiter (15) aufweist, der eine proximale Fläche (16) in der Nähe des Gehäusemittelteils und eine distale Fläche (17) entfernt vom Gehäusemittelteil umfasst, wobei der Lichtleiter die Übertragung von optischen Signalen zwischen seiner distalen Fläche und seiner proximalen Fläche ermöglicht, wobei die distale Fläche (17) dafür ausgelegt ist, dass ein Benutzer sie mit dem Finger (35) berühren kann,
- die Uhr mit mindestens einer Lichtquelle (18) versehen, die mindestens einen Teil der distalen Fläche (17) durch den Lichtleiter (15) hindurch beleuchten kann,
- die Uhr mit einer Bildaufnahmevorrichtung versehen ist, die einen Fotodetektor (19) umfasst und so angeordnet ist, dass dann, wenn die Lichtquelle (18) aktiv ist, ein Bild eines Teils eines Fingers (35) eines Benutzers erzeugt werden kann, der sich auf Höhe der distalen Fläche (17) des optischen Leiters (15) in einer räumlich bestimmten und relativ zu dem Gehäusemittelteil (5) festen Zone befindet,
- die Uhr einen Prozessor aufweist, der so konfiguriert ist, dass vom Fotodetektor (19) mehrere aufeinanderfolgende digitale Bilder von Teilen des Fingers, die sich nacheinander in der Erfassungszone befinden, empfangen werden können, um diese mehreren digitalen Bilder in der Weise verarbeiten zu können, dass eine Bewegung des Fingers relativ zu der Erfassungszone detektiert wird, und zum Erzeugen eines Befehls, der die elektronische Funktion der Uhr auf der Grundlage der Fingerbewegung steuert.

2. Uhr nach Anspruch 1, **dadurch gekennzeichnet, dass** der Lichtleiter (15) ein zu der Mittelachse (12) koaxiales, torisches Teil ist.

3. Uhr nach Anspruch 2, **dadurch gekennzeichnet, dass** der Lichtleiter (15) die Form eines Rohrs hat, das zwischen einem Zylinder (13) und einem Ring (14) befestigt ist, die aus einem lichtundurchlässigen Material hergestellt sind und zusammen mit dem Lichtleiter (15) das Steuerorgan (1) bilden.

4. Uhr nach einem der vorhergehenden Ansprüche, **dadurch gekennzeichnet, dass** die Lichtquelle (18) und der Fotodetektor (19) in oder an der inneren Oberfläche der Seitenwand des Gehäusemittelteils (5) angebracht sind, wobei das Gehäusemittelteil zwei optische Kanäle (22, 23) besitzt, die jeweils vor der Lichtquelle bzw. dem Fotodetektor positioniert sind, wobei die Kanäle durch einen lichtundurchlässigen Separator (21) getrennt sind und jeweils mit Linsen (24, 25) versehen sind, die so angeordnet sind, dass:
- die erste Linse (24) die Lichtstrahlen (R1), die von der Lichtquelle erzeugt werden, verbreitert, derart, dass die Erfassungszone beleuchtet wird,
- die zweite Linse (25), die die Bildaufnahmevorrichtung bildet und so angeordnet ist, dass das Bild auf den Fotodetektor projiziert wird.

5. Uhr nach Anspruch 4, **dadurch gekennzeichnet, dass**:
- die Quelle (18) und der Fotodetektor (19) auf einer gemeinsamen PCB (30) montiert sind,
- der Separator (21) an der PCB befestigt ist und sich von einer Oberfläche der PCB erhebt, und
- die Linsen (24, 25) an dem Separator (21) befestigt sind.

6. Uhr nach einem der vorhergehenden Ansprüche, **dadurch gekennzeichnet, dass** das Steuerorgan eine drehbare Krone (1) ist, die ein längliches Element (6, 2) um die Mittelachse (12) drehen kann, wenn ein Benutzer die Krone (1) dreht, um eine erste Funktion, die von der elektronischen Funktion verschieden ist, auszuführen.

7. Uhr nach einem der Ansprüche 1 bis 5, **dadurch gekennzeichnet, dass** das Steuerorgan ein Kopf eines Drückers ist, der als erste Funktion eine Aktivierung einer Chronographen-Funktion, mit der die Uhr ausgestattet ist, hat, wobei diese erste Funktion von der elektronischen Funktion verschieden ist.

8. Uhr nach einem der vorhergehenden Ansprüche, **dadurch gekennzeichnet, dass** das Steuerorgan (1) eine axiale und selbstumkehrende Annäherung an das Gehäusemittelteil (5) ausführen kann; dass die Uhr mindestens einen Detektor enthält, der so beschaffen ist, dass er die axiale Annäherung detektieren kann; und dass der Prozessor konfiguriert ist, in Reaktion auf die axiale Annäherung einen bestimmten Befehl zu erzeugen.

9. Uhr nach Anspruch 8, **dadurch gekennzeichnet, dass** der durch die Erkennung der axialen Annäherung erzeugte bestimmte Befehl die Aktivierung oder die Deaktivierung der Lichtquelle und des Fotodetektors ist.

10. Uhr nach Anspruch 8, **dadurch gekennzeichnet, dass** ein durch die Erkennung der axialen Annäherung erzeugter Befehl die Bestätigung einer Auswahl ist.

11. Uhr nach einem der vorhergehenden Ansprüche, **dadurch gekennzeichnet, dass** das Uhrwerk vom mechanischen Typ ist.

## Claims

1. A watch comprising a case, which includes a middle (5) and a control member (1) defining a central axis (12) and mounted laterally with respect to the middle, the watch being provided with at least one electronic feature; **characterised in that**:
- the case includes an horological movement inside the middle,
- the control member (1) includes an optical guide (15) comprising a proximal face (16) close to the middle and a distal face (17) distant from the middle, said optical guide making it possible for the transmission of optical signals between the distal face thereof and the proximal face thereof, the distal face (17) being arranged such that a user can touch it with their finger (35),
- the watch is provided with at least one light source (18) capable of illuminating at least one portion of the distal face (17) through the optical guide (15),
- the watch is provided with an imaging device comprising a photodetector (19) and arranged to be able to produce, when the light source (18) is active, an image of a portion of a finger (35) of a user which is located at the level of the distal face (17) of the optical guide (15) in a detection zone, spatially determined and fixed relative to the middle (5),
- the watch includes a processor configured to be able to receive from the photodetector (19), a plurality of successive digital images of portions of said finger which are located successively in said detection zone, to be able to process this plurality of digital images so as to detect a movement of said finger relative to said detection zone, and to be able to generate a command which manages said electronic feature of the watch based on said movement of the finger.

2. Watch according to claim 1, **characterised in that** the optical guide (15) is a toroidal coaxial part with the central axis (12).

3. Watch according to claim 2, **characterised in that** the optical guide (15) has the form of a tube which is fixed between a cylinder (13) and a ring (14) manufactured from an opaque material and forming, with the optical guide (15), the control member (1).

4. Watch according to any one of the preceding claims, **characterised in that** the light source (18) and the photodetector (19) are incorporated in or against the inner surface of the side wall of the middle (5), which is provided with two optical channels (22, 23) which are positioned respectively opposite the light source and the photodetector, the channels being separated by an opaque separator (21) and being provided respectively with lenses (24, 25) arranged such that:
- the first lens (24) extends the light beams (R1) generated by the source, so as to illuminate said detection zone,
- the second lens (25), forming the imaging device, being arranged to project said image on the photodetector.

5. Watch according to claim 4, **characterised in that**:
- the source (18) and the photodetector (19) are mounted on one same PCB (30),
- the separator (21) is fixed to the PCB and is raised from a surface of the PCB,
- the lenses (24,25) are fixed to the separator (21).

6. Watch according to any one of the preceding claims, **characterised in that** the control member is a rotating crown (1), capable of rotating an extended element (6, 2) about the central axis (12) when a user rotates the crown (1) to carry out a first function other than the one of said electronic feature.

7. Watch according to any one of claims 1 to 5, **characterised in that** the control member is a head of a pushbutton having, as a first function, an activation of a feature of a chronograph equipping the watch, this first function being other than the one of said electronic function.

8. Watch according to any one of the preceding claims, **characterised in that** the control member (1) is capable of undergoing an axial and self-reversible alignment with respect to the middle (5); **in that** the watch comprises at least one detector arranged so as to be able to detect said axial alignment; and **in that** said processor is configured to generate, in response to said axial alignment, a specific command.

9. Watch according to claim 8, **characterised in that** the specific command generated by the detection of said axial alignment is the activation or the deactivation of the light source and of the photodetector.

10. Watch according to claim 8, **characterised in that** a command generated by the detection of said axial alignment is the confirmation of a selection.

11. Watch according to any one of the preceding claims, **characterised in that** the horological movement is of the mechanical type.
